# EUROPÄISCHE PATENTSCHRIFT

(11) **EP 0 731 547 B1**
(45) Veröffentlichungstag und Bekanntmachung des Hinweises auf die Patenterteilung: **18.11.1998**
(21) Anmeldenummer: 96103189.5
(22) Anmeldetag: 01.03.1996
(51) Int. Cl.: H02J 7/10

(54) **Verfahren zur Kompensation des Einflusses der Umgebungstemperatur auf das Abschaltkriterium "Temperaturgradient" beim Schnelladen von Akkumulatoren**
Method for compensating the influence of ambient temperature on the "temperature gradient" shut-off criteria when quick charging batteries
Procédé pour compenser l'influence de la température ambiante sur le critère de coupure "gradient de température" lors de la charge rapide d'accumulateurs

(30) Priorität: 09.03.1995 DE 19508503
(43) Veröffentlichungstag der Anmeldung: 11.09.1996
(73) Patentinhaber: SIEMENS AKTIENGESELLSCHAFT, 80333 München (DE)
(72) Erfinder: Koch, Georg, Ing.grad., 85716 Unterschleissheim (DE); Luginger, Franz, Dipl.-Ing., 84577 Tüssling (DE)

(56) Entgegenhaltungen:
- EP-A- 0 626 746
- DE-A- 3 705 222
- DE-A- 4 332 533
- GB-A- 2 061 643
- US-A- 5 391 974

## Beschreibung

Die Erfindung bezieht sich auf ein Verfahren gemäß der im Oberbegriff des Anspruchs 1 angegebenen Art (Vgl DE-A-3 705 222).

Beim Schnelladen von NiCd- bzw. NiMH-Akkus ist ein sehr zuverlässiges und exaktes Ladeschlußkriterium der Temperaturanstieg, den eine Akkuzelle durch innere Erwärmung erfährt, wenn sie vollgeladen ist, d.h. die zugeführte elektrische Energie nicht mehr chemisch binden kann und über eine einsetzende Gasrekombination in Wärmeenergie umsetzt. Ein Problem dabei stellt allerdings der Einfluß der Umgebungstemperatur dar, da ein Temperaturunterschied zwischen Akku und Umgebung naturgemäß eine Änderung der Akkutemperatur zur Folge hat, die wiederum die Auswertung des Temperaturgradienten des Akkus in der Weise beeinflußt, daß entweder die Akkuladung zu früh oder unbegründet oder zu spät bzw. gar nicht abgeschaltet wird. Speziell in Anwendungen mit großen Schwankungen der Umgebungstemperatur zwischen Akku und Umgebung, wie sie beispielsweise bei Mobilfunkgeräten in Kraftfahrzeugen auftreten, stellt der Temperaturgradient bisher ein nicht auswertbares Abschaltkriterium dar.

Andere Abschaltkriterien, auf die daher zurückgegriffen wurde, haben jedoch gravierende Nachteile. Dies gilt beispielsweise für das Absoluttemperaturkriterium oder die Minus-Delta-U-Methode. Beim Abschalten der Absoluttemperatur wird bereits im Normalfall der Akku deutlich und unter ungünstigen Umständen erheblich überladen, was sich sehr negativ auf die Lebensdauer des Akkus auswirkt. Ebenso führt auch die Minus-Delta-U-Methode zu Problemen, wenn z.B. beim Einsatz im Fahrzeug der Ladestrom wegen zusammenbrechender Versorgungsspannung (Anlassen des Motors) sich verringert und infolge davon auch die Ladespannung einbricht, was dann fälschlicherweise als Minus-Delta-U-Kriterium gewertet werden kann. Bei NiMH-Akkus ist diese Methode wegen des extrem flachen Spannungsverlaufs am Ende der Ladung ohnehin problematisch.

Der Erfindung liegt die Aufgabe zugrunde, eine einfache Lösung anzugeben für ein Verfahren zur Kompensation des Einflusses der Umgebungstemperatur auf das Abschaltkriterium Temperaturgradient beim Schnelladen von Akkumulatoren.

Diese Aufgabe wird mit einem Verfahren der eingangs beschriebenen Art gemäß der Erfindung in der Weise gelöst, daß der von einer Meßschaltung ermittelte Temperaturgradient des Akkus vor der Überprüfung auf den Grenzwert um einen Wert korrigiert wird, der von dem ermittelten Temperaturgradienten des Akkus vor dem Schnelladen abgeleitet wird.

In vorteilhafter Ausgestaltung der Erfindung ist vorgesehen, daß der Korrekturwert in der Weise ermittelt wird, daß der sich bei einer bestimmten Temperaturdifferenz ergebende Temperaturgradient des Akkus vor der Schnelladung gemessen wird und sich mit der thermischen Zeitkonstante des Akkus verringert.

Nachstehend wird die Erfindung anhand von in der Zeichnung dargestellten Diagrammen näher erläutert.

Vorab wird der Verfahrensablauf bei der Kompensation des Einflusses der Umgebungstemperatur auf das Abschaltkriterium Temperaturgradient noch kurz beschrieben: Der durch eine Meßschaltung ermittelte Temperaturgradient des Akkus wird, bevor er auf den Grenzwert überprüft wird, um einen Wert korrigiert, der von dem Temperaturgradienten vor Beginn des Schnelladens, d.h. von der Umgebungstemperatur beeinflußt, abgeleitet wird.

Der Korrekturwert kann unter realen Bedingungen ermittelt werden. Dabei ist es notwendig, vor dem Schnelladen den Temperaturgradienten des Akkus zu bestimmen. Zu jedem Zeitpunkt verringert sich dieser Wert mit der thermischen Zeitkonstanten des Akkus.

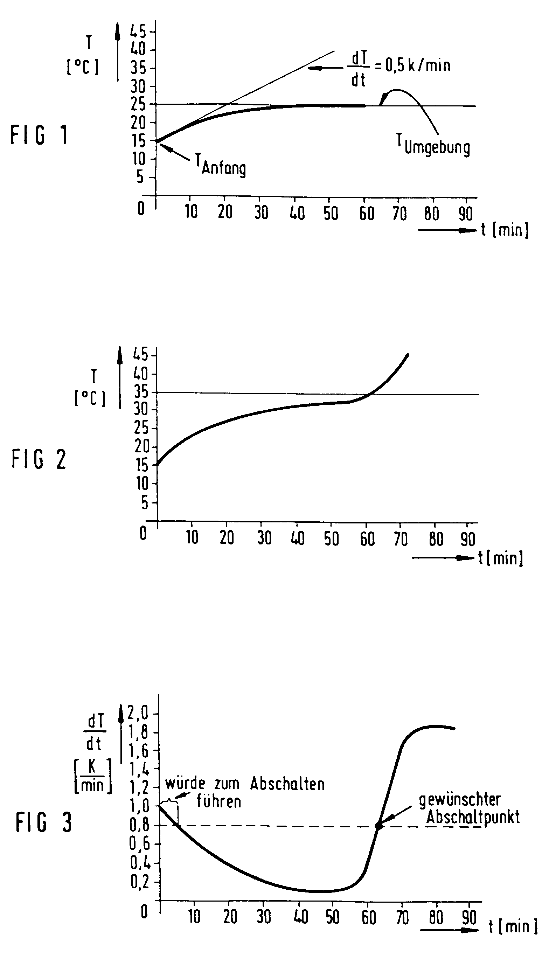

In Figur 1 ist in einem Diagramm die Anpassung der Akkutemperatur an die Umgebung ohne Energiezufuhr durch Ladestrom dargestellt. Dabei ist die Temperatur T über der Zeit t aufgetragen. Die Umgebungstemperatur ist mit 25 °C angenommen. Die Anfangstemperatur des Akkus beträgt 15 °C. Von diesem Anfangswert nähert sich die Akkutemperatur innerhalb einer bestimmten Zeit der Umgebungstemperatur. An die Temperaturkurve ist im Anfangsbereich die Tangente angelegt, die den Temperaturgradienten darstellt, d.h. die Temperaturänderung pro Zeiteinheit : dT/dt = 0,5 K/min.

Im Diagramm nach Figur 2 ist der reale Verlauf der Akkutemperatur beim Laden als Funktion der Zeit aufgetragen. Die Umgebungstemperatur ist hierbei mit 35 °C angenommen. Der Temperaturanstieg bis ca. 50 min. ist überwiegend durch die höhere Umgebungstemperatur verursacht, danach durch die Energiezufuhr mit dem Ladestrom, die nicht mehr chemisch gebunden werden kann. Nach ca. 60 min ist die Umgebungstemperatur erreicht und die Akkutemperatur steigt steil an.

Figur 3 zeigt den realen Verlauf der Temperatursteigung, d.h. das Verhältnis dT/dt als Funktion der Zeit t. Bei einem Wert dT/dt = 0,8 ist eine strichlierte Linie als Grenzwert für den Temperaturgradienten eingezeichnet. Die Kurve der Temperatursteigung fällt von einem Wert dT/dt = 1 nach etwa 50 min auf einen Wert von annähernd dT/dt = 0,1 ab und steigt dann sehr steil an. Es gibt dabei zwei Bereiche der Kurve über der Grenzwertlinie für den Temperaturgradienten. Der erste Bereich liegt im fallenden Abschnitt der Kurve und würde zu einem ungewünschten Abschalten der Akkuladung führen, der zweite Bereich im positiven Anstiegsbereich der Kurve bildet den gewünschten Abschaltpunkt.

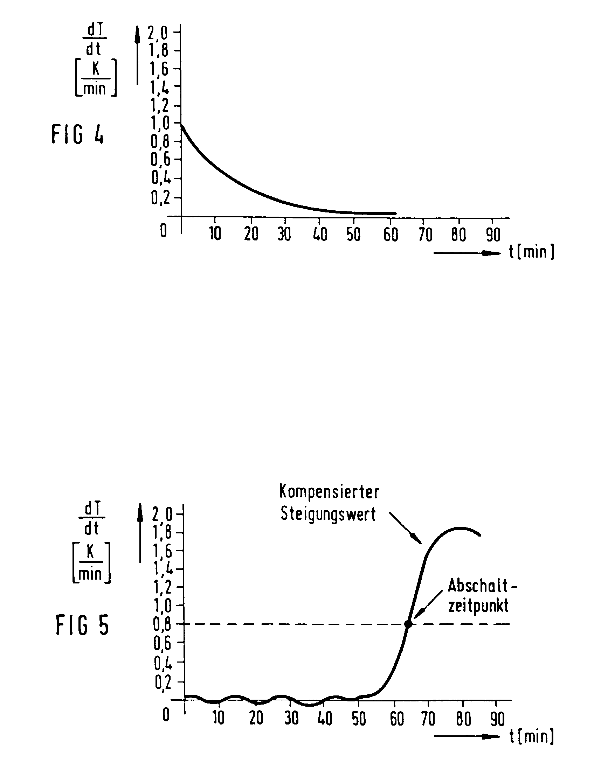

Aus dem Temperaturgradienten des Akkus vor dem Schnelladen und der thermischen Zeitkonstanten des Akkus wird ein Korrekturwert ermittelt, der im Diagramm nach Figur 4 dargestellt ist. Hierbei ist widerum der Wert dT/dt über der Zeit aufgetragen. Von einem Anfangswert 1,0 fällt der Korrekturwert allmählich gegen Null ab (nach ca. 50-60 min).

In Figur 5 ist die kompensierte Akkusteigung als Differenz der tatsächlichen Akkusteigung und der Temperatursteigung im Bezugspunkt dargestellt. Es handelt sich dabei also um eine Differenzbildung der Kurve nach Figur 3 minus der Kurve nach Figur 4. Der erste, abfallende Kurventeil der Temperatursteigung von Figur 3 ist dabei nahezu kompensiert. Es ist lediglich ein nicht kompensierter, um die Nullachse pendelnder Restfehler vorhanden, der hauptsächlich durch die Digitalisierung und die nachfolgende Differenzierung entsteht. Für den Abschaltzeitpunkt der Schnelladung des Akkus ist nunmehr ein eindeutiger Wert gegeben.

Unter Zugrundelegung der vorstehend beschriebenen Diagramme wird in einer beispielshaften Ausführung bei einer Temperaturdifferenz von 10 K(Umgebung = 25 °C, Akku = 15°C) eine Erwärmung des Akkus von 0,5 K/min gemessen. Als Abschaltwert für den Schnelladestrom wurde anhand der Meßkurve an diesem Akku 0,8 K/min festgelegt. Eine um 20 K höhere Umgebungstemperatur erwärmt den Akku um 1 K/min. Um wirklich abzuschalten, muß jedoch durch die Korrektur ein Temperaturgradient von 1,8 K/min überschritten werden. Ist jedoch die Umgebungstemperatur 20 K unter der Akkutemperatur, so ist ein Abkühlen des Akkus um weniger als 0,2 K/min bereits ein Abschaltgrund.

## Patentansprüche

1. Verfahren zum Schnelladen von Akkumulatoren, bei welchem das Abschaltkriterium Temperaturgradient vorgesehen ist, dadurch gekennzeichnet, daß zur Kompensation des Einflusses der Umgebungstemperatur der von einer Meßschaltung ermittelte Temperaturgradient des Akkus vor der Überprüfung auf einen Grenzwert um einen Wert korrigiert wird, der von dem ermittelten Temperaturgradienten des Akkus vor dem Schnelladen abgeleitet wird.

2. Verfahren nach Anspruch 1, dadurch gekennzeichnet, daß der Korrekturwert in der Weise ermittelt wird, daß der sich bei einer bestimmten Temperaturdifferenz ergebende Temperaturgradient des Akkus vor dem Schnelladen gemessen wird und sich mit der thermischen Zeitkonstanten des Akkus verringert.

## Claims

1. Method for the rapid charging of batteries, in which the temperature gradient switch-off criterion is provided, characterized in that, in order to compensate for the effect of ambient temperature, the temperature gradient of the battery, determined by a measuring circuit, is corrected before checking for a limit value by a value which is derived from the determined temperature gradient of the battery before the rapid charging.

2. Method according to Claim 1, characterized in that the correction value is determined by measuring the temperature gradient of the battery which occurs at a particular temperature difference before the rapid charging, and decreases with the thermal time constant of the battery.

## Revendications

1. Procédé de charge rapide d'accumulateurs dans lequel il est prévu le critère de coupure "gradient de température", caractérisé en ce que pour compenser l'influence de la température ambiante, le gradient de température de l'accumulateur déterminé par un circuit de mesure est, avant d'être contrôlé par rapport à une valeur limite, corrigé d'une valeur limite déduite du gradient de température de l'accumulateur déterminé avant la charge rapide.

2. Procédé selon la revendication 1, caractérisé en ce que la valeur de correction est déterminée en mesurant, avant la charge rapide, le gradient de température de l'accumulateur se produisant pour une différence de température déterminée et diminuant avec la constante de temps thermique de l'accumulateur.
